# EUROPEAN PATENT APPLICATION

(11) **EP 4 269 471 A1**
(43) Date of publication of application: **01.11.2023**
(21) Application number: 20966416.8
(22) Date of filing: 24.12.2020
(51) Int. Cl.: C08G 83/00, B01J 31/22, C07C 2/08, C07C 11/02, B01J 31/38

(54) **COVALENT ORGANIC FRAMEWORK AND CATALYST, PREPARATION METHODS THEREFOR, AND APPLICATIONS THEREOF**

(71) Applicant: Zhejiang University, Xihu District Hangzhou Zhejiang 310058 (CN)
(72) Inventor: LIU, Pingwei, HANGZHOU, Zhejiang 310058 (CN); WANG, Wen-Jun, HANGZHOU, Zhejiang 310058 (CN); LUO, Liqiong, HANGZHOU, Zhejiang 310058 (CN); ZHANG, Ziyang, HANGZHOU, Zhejiang 310058 (CN); LI, Bo-Geng, HANGZHOU, Zhejiang 310058 (CN)
(74) Representative: Marturano, Pasqualino
(86) International application number: PCT/CN2020/138789
(87) International publication number: WO 2022/133843

(57) **Abstract**

The present invention relates to a covalent organic framework which is a two-dimensional polymer formed by repeatedly arranging structural units represented by formula I or formula II and bonding same by means of covalent bonds. The present invention also relates to a catalyst, preparation methods for the covalent organic framework and the catalyst, and applications of the covalent organic framework and the catalyst in catalyzing olefin polymerization. The covalent organic framework can be used as a support to control the stereoregular polymerization of olefins in a confined space. The catalyst has high catalytic activity and good high-temperature stability, and widens the range of types of olefin polymerization catalysts.

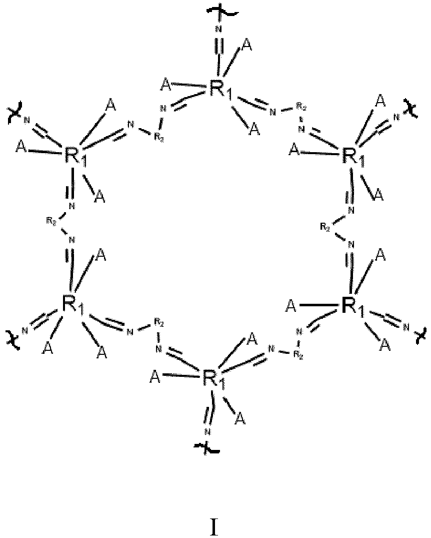

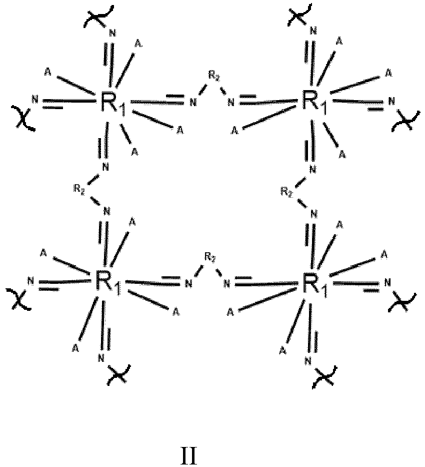

## Description

### Technical Field

The present invention belongs to the field of catalytic materials, specifically relates to a covalent organic framework material, and also relates to a catalyst, methods for preparing the covalent organic framework material and the catalyst, and applications thereof in catalyzing olefin polymerization.

### Background Art

Polyolefin materials are widely used in the fields of toys, food, daily chemicals, energy, automobiles and so on. Olefin polymerization catalysts are the core of the polyolefin industry, and the research and development of new catalysts can drive the upgrading of the entire polyolefin industry. For example, the emergences of Z-N catalysts in the 1950s and Sinn and Kaminsky metallocene catalysts in the 1980s both contributed to major advances in the polyolefin industry, and the subsequent developments of post-metallocene catalysts and non-metallocene catalysts have enriched the types of polyolefins and improved product performance. However, Z-N catalysts have multiple active centers, resulting in wider molecular weight distribution, lower activity, and poor stereoselectivity in polyolefin products; single-active-site metallocene catalysts have advantages such as high activity, narrow molecular weight distribution, and good stereoregularity, but metallocene catalysts have poor tolerance to polar monomers, which limits their application in the development of polyolefin materials containing polar groups; post-metallocene catalysts without pentadienyl have good tolerance to polar monomers and high polymerization activity. However, both metallocene catalysts and post-metallocene catalysts are homogeneous catalysts, and the current industrial devices for olefin polymerization are mainly dominated by supported heterogeneous catalysts. Thus, a high-performance supported catalyst is required. Therefore, there is an urgent need for a novel supported olefin polymerization catalyst with high activity.

Covalent Organic Frameworks (COFs) are a new class of crystalline organic porous materials, which are polymers with a two-dimensional planar network structure formed by repeating organic structural units connected by covalent bonds, and have the advantages of high stability, high specific surface area, and regular pore structure, and their organic structural units are precise, regular, and adjustable.

### Contents of the present invention

One object of the present invention is to provide a covalent organic framework material, which has a certain catalytic activity, and at the same time, the covalent organic framework material can be used as a support of olefin polymerization catalysts, and its regular pore structure can be used to control the oriented polymerization of olefin in confined space. Another object of the present invention is to provide an olefin polymerization catalyst, which is obtained by coordination bonding of the aforementioned covalent organic framework material and a transition metal compound, and this catalyst has an improved catalytic activity and high temperature stability.

To achieve the above objects, the first aspect of the present invention relates to a covalent organic framework material, which is a two-dimensional polymer formed by repeatedly arranging and covalently bonding structural units as shown in Formula I or Formula II; 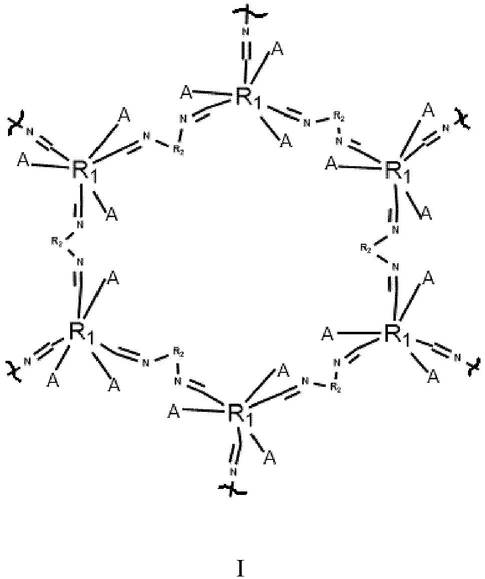 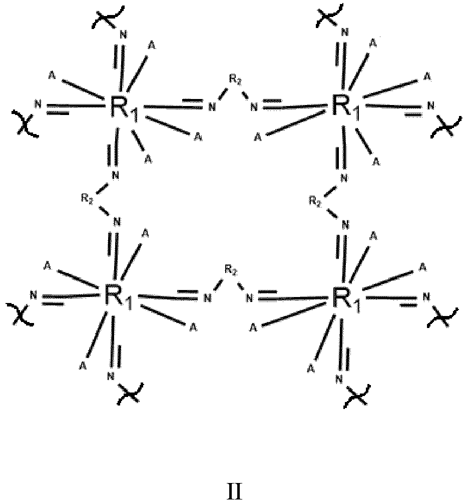 wherein,
R₁ is selected from the group consisting of 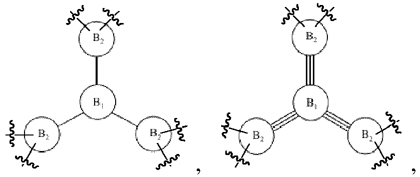 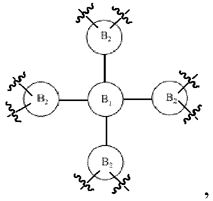 and C₄₋₁₂ saturated alicyclic ring (preferably C₅₋₁₀ saturated alicyclic ring or C₅₋₈ cycloalkyl ring), wherein, B₁ ring and B₂ ring are each independently selected from the group consisting of substituted or unsubstituted C₅₋₁₀ aromatic ring (preferably C₅₋₈ aromatic ring), substituted or unsubstituted 10- to 30-membered heteroaromatic ring (preferably 16- to 30-membered heteroaromatic ring or 20- to 30-membered heteroaromatic ring), wherein the substituted C₅₋₁₀ aromatic rings and the substituted 10- to 30-membered heteroaromatic rings are each independently substituted by one or more of the following substituents: H, C₁₋₆ alkyl, C₁₋₆ alkoxy, hydroxyl, mercapto, amino;
R₂ is selected from the group consisting of C₁₋₆ alkylene, C₄₋₁₂ saturated alicyclic ring (preferably C₅₋₁₀ saturated alicyclic ring or C₅₋₈ cycloalkyl ring) and 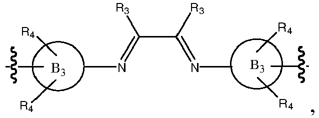 wherein, B₃ ring is a substituted or unsubstituted C₅₋₁₀ aromatic ring (preferably C₅₋₈ aromatic ring), R₃ and R₄ are each independently selected from the group consisting of substituted or unsubstituted C₁₋₆ alkyl, substituted or unsubstituted C₁₋₆ alkoxy, wherein the substituted C₅₋₁₀ aromatic ring, the substituted C₁₋₆ alkyls and the substituted C₁₋₆ alkoxys are each independently substituted by one or more of the following substituents: H, halogen, hydroxyl, amino;
A is selected from the group consisting of H, oxo, hydroxyl, mercapto, amino, C₁₋₆ alkyl and C₁₋₆ alkoxy.

In some embodiments of the first aspect of the present invention, R₁ is selected from the group consisting of 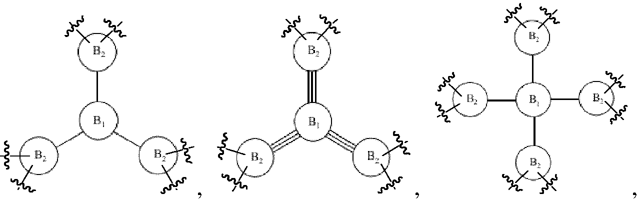 and C₅₋₁₀ saturated alicyclic ring (preferably C₅₋₈ cycloalkyl ring), wherein, B₁ ring and B₂ ring are each independently selected from the group consisting of substituted or unsubstituted C₅₋₈ aromatic ring, substituted or unsubstituted 16- to 30-membered heteroaromatic ring (preferably 20- to 30-membered heteroaromatic ring), wherein the substituted C₅₋₈ aromatic rings and the substituted 16- to 30-membered heteroaromatic rings are each independently substituted by one or more of the following substituents: H, C₁₋₆ alkyl, C₁₋₆ alkoxy.

In some embodiments of the first aspect of the present invention, R₁ is selected from the group consisting of 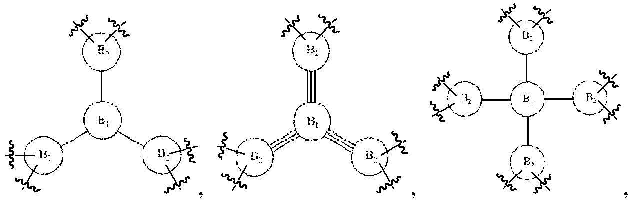 and C₅₋₈ cycloalkyl ring, wherein, B₁ ring and B₂ ring are each independently selected from the group consisting of substituted or unsubstituted C₅₋₈ aromatic ring, 20- to 30-membered heteroaromatic ring, wherein the substituted C₅₋₈ aromatic rings are each independently substituted by one or more C₁₋₆ alkyl groups.

In some embodiments of the first aspect of the present invention, R₁ is selected from the group consisting of 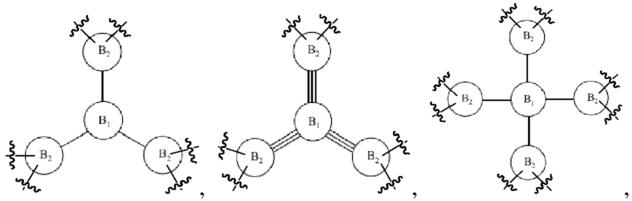 and cyclohexyl ring, wherein, B₁ ring is selected from the group consisting of phenyl ring and porphyrinyl ring, and B₂ is selected from the group consisting of phenyl ring and tert-butyl substituted phenyl ring (e.g., 3-tert-butylphenyl).

In some embodiments of the first aspect of the present invention, R₁ is selected from the group consisting of 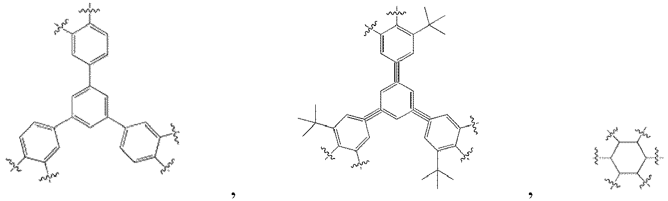 and

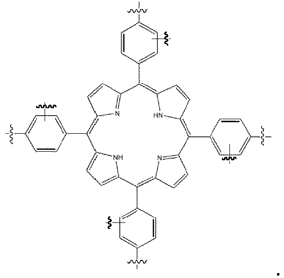

In some embodiments of the first aspect of the present invention, R₁ is selected from the group consisting of 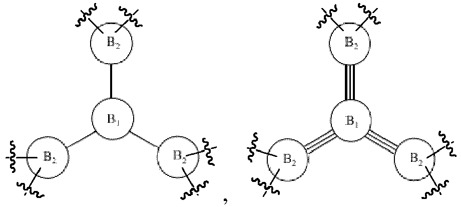 and C₅₋₁₀ saturated alicyclic ring (preferably C₅₋₈ cycloalkyl ring), wherein, B₁ ring and B₂ ring are each independently selected from the group consisting of substituted or unsubstituted C₅₋₈ aromatic ring (e.g., phenyl ring), wherein the substituted C₅₋₈ aromatic rings are each independently substituted by one or more of the following substituents: H, C₁₋₆ alkyl, C₁₋₆ alkoxy.

In some embodiments of the first aspect of the present invention, R₁ is selected from the group consisting of 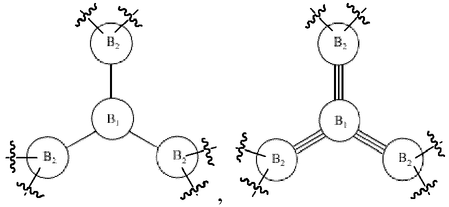 and C₅₋₈ cycloalkyl ring, wherein, B₁ ring and B₂ ring are each independently selected from the group consisting of substituted or unsubstituted C₅₋₈ aromatic ring (e.g., phenyl ring), wherein the substituted C₅₋₈ aromatic rings are each independently substituted by one or more C₁₋₆ alkyl groups.

In some embodiments of the first aspect of the present invention, R₁ is selected from the group consisting of 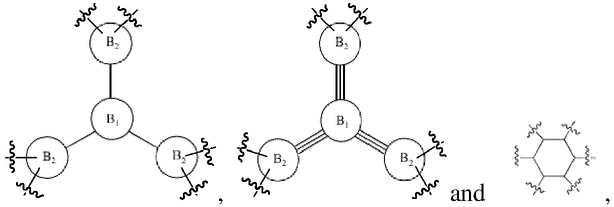 wherein, B₁ ring is a phenyl ring, and B₂ is selected from the group consisting of phenyl ring and tert-butyl-substituted phenyl ring (e.g., 3-tert-butylphenyl).

In some embodiments of the first aspect of the present invention, R₁ is selected from the group consisting of

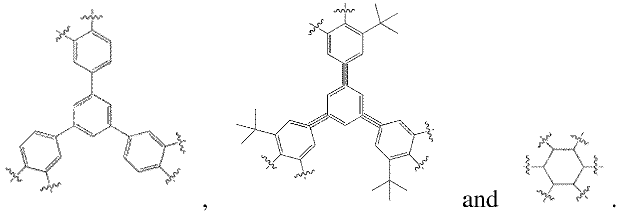

In some embodiments of the first aspect of the present invention, R₁ is 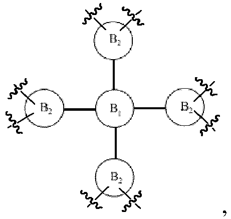 wherein, B₁ ring and B₂ ring are each independently selected from the group consisting of substituted or unsubstituted C₅₋₈ aromatic ring (e.g., phenyl ring), substituted or unsubstituted 16-to 30-membered heteroaromatic ring (preferably, 20- to 30-membered heteroaromatic ring), wherein the substituted C₅₋₈ aromatic rings and the substituted 16- to 30-membered heteroaromatic rings are each independently substituted by one or more of the following substituents: H, C₁₋₆ alkyl, C₁₋₆ alkoxy.

In some embodiments of the first aspect of the present invention, R₁ is 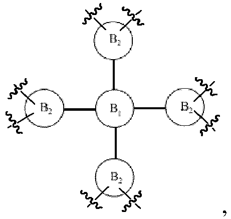 wherein, B₁ ring and B₂ ring are each independently selected from the group consisting of C₅₋₈ aromatic ring (e.g., phenyl ring), and 20- to 30-membered heteroaromatic ring.

In some embodiments of the first aspect of the present invention, R₁ is 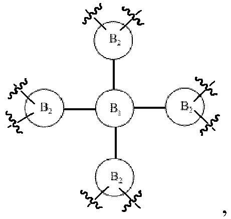 wherein, B₁ ring is a porphyrinyl ring, and B₂ ring is a phenyl ring.

In some embodiments of the first aspect of the present invention, R₁ is

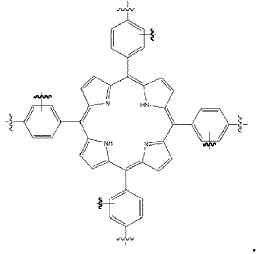

In some embodiments of the first aspect of the present invention, R₂ is selected from the group consisting of C₁₋₆ alkylene, C₅₋₁₀ saturated alicyclic ring (e.g., C₅₋₈ cycloalkyl ring) and 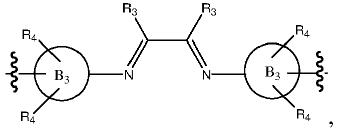 wherein, the B₃ ring is a C₅₋₈ aromatic ring (e.g., phenyl ring), R₃ and R₄ are each independently selected from the group consisting of C₁₋₆ alkyl, C₁₋₆ alkoxy.

In some embodiments of the first aspect of the present invention, R₂ is selected from the group consisting of C₁₋₆ alkylene, C₅₋₈ cycloalkyl ring and 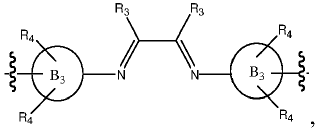 wherein, B₃ ring is a phenyl ring, R₃ and R₄ are each independently selected from the group consisting of C₁₋₆ alkyl.

In some embodiments of the first aspect of the present invention, R₂ is selected from the group consisting of -(CH₂)₂-,

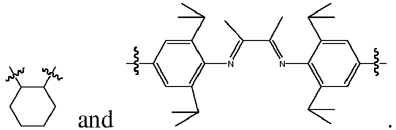

In some embodiments of the first aspect of the present invention, R₂ is 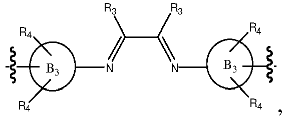 wherein, B₃ ring is a C₅₋₈ aromatic ring (e.g., phenyl ring), R₃ and R₄ are each independently selected from the group consisting of C₁₋₆ alkyl, C₁₋₆ alkoxy.

In some embodiments of the first aspect of the present invention, R₂ is 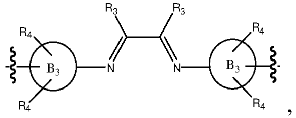 wherein, B₃ ring is a phenyl ring, and R₃ and R₄ are each independently selected from the group consisting of C₁₋₆ alkyl group.

In some embodiments of the first aspect of the present invention, R₂ is

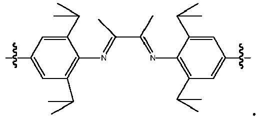

In some embodiments of the first aspect of the present invention, A is selected from the group consisting of H, oxo, hydroxyl, mercapto, amino, C₁₋₆ alkyl and C₁₋₆ alkoxy.

In some embodiments of the first aspect of the present invention, A is selected from the group consisting of H, oxo, hydroxyl and mercapto.

In some embodiments of the first aspect of the present invention, A is selected from the group consisting of oxo, hydroxyl, mercapto, amino, C₁₋₆ alkyl and C₁₋₆ alkoxy.

In some embodiments of the first aspect of the present invention, A is selected from the group consisting of oxo, hydroxyl and mercapto.

In some embodiments of the first aspect of the present invention, A is H.

In some embodiments of the first aspect of the present invention, the structural unit is selected from: 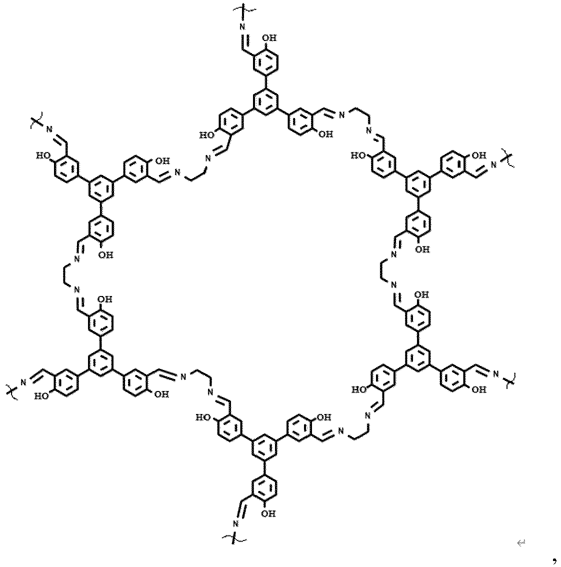 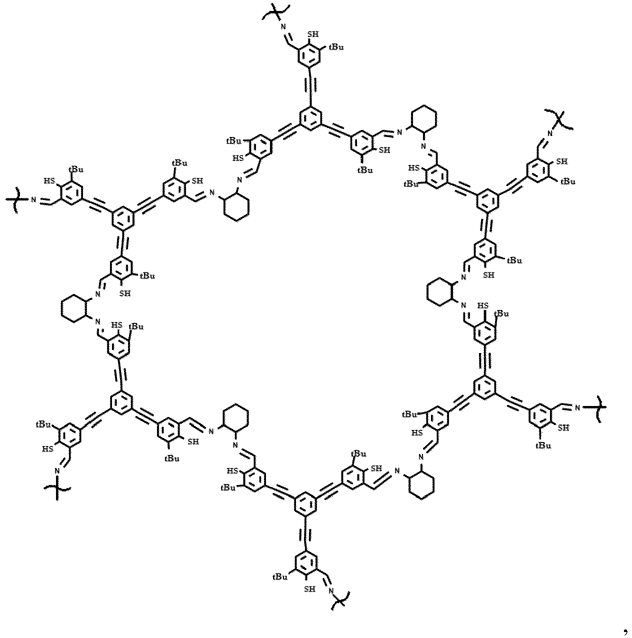 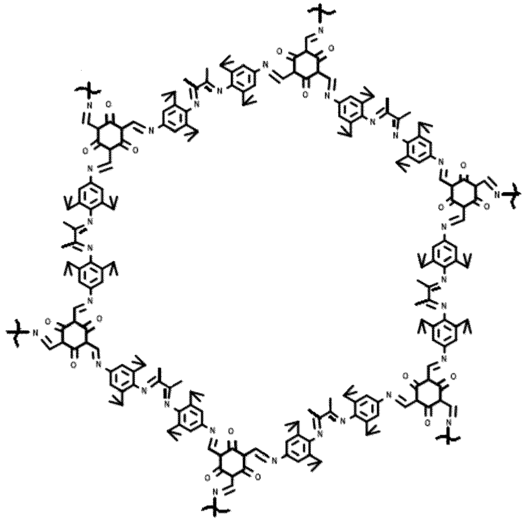 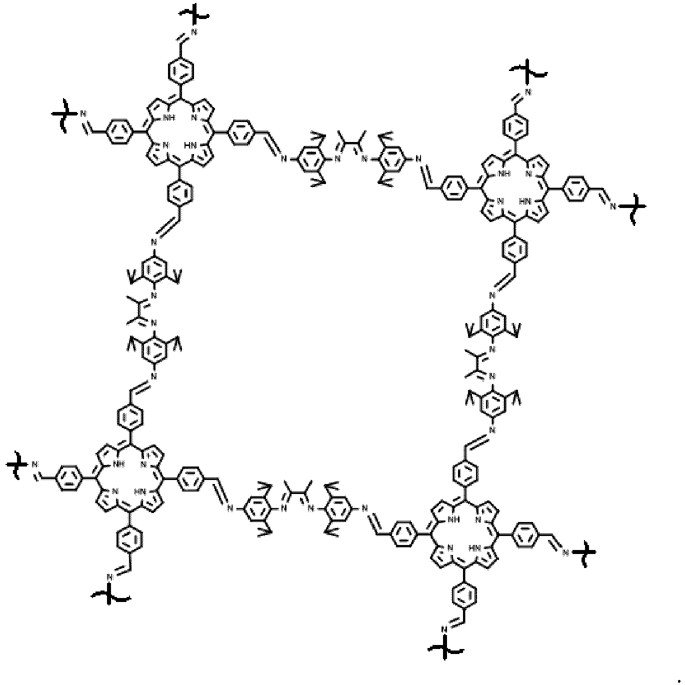 , and

The second aspect of the present invention relates to a catalyst, which is formed by bonding the covalent organic framework material described in the first aspect of the present invention and a transition metal compound through a coordination bond.

In some embodiments of the second aspect of the present invention, the transition metal compound is a compound comprising at least one selected from the group consisting of Sc, Ti, Zr, Hf, V, Cr, Mn, Fe, Ni and Pd.

In some embodiments of the second aspect of the present invention, the transition metal compound is selected from the group consisting of zirconium tetrachloride, hafnium tetrachloride, tetrabenzyl hafnium, and methylated cyclopentadienyl palladium chloride.

In some embodiments of the second aspect of the present invention, when R₂ in the structural unit shown in Formula I or Formula II is selected from the group consisting of C₁₋₆ alkylene and C₄₋₁₂ saturated alicyclic ring, the transition metal atom forms coordination bonds with two nitrogen atoms and two A groups in the structural unit shown in Formula I or Formula II, respectively; or, when R₂ in the structural unit shown in Formula I or Formula II is 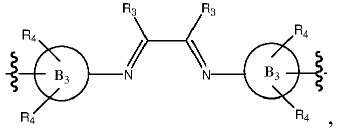 the transition metal atom forms a coordination bond with at least one nitrogen atom in R₂ (e.g., forms a coordination bond with one or two nitrogen atoms).

In some embodiments of the second aspect of the present invention, the catalyst is formed by repeatedly arranging and covalently bonding any one of the following cyclic structural units; 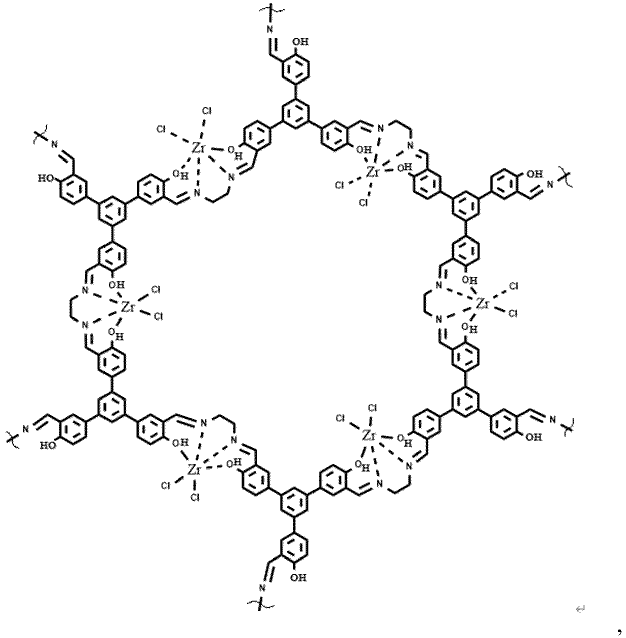 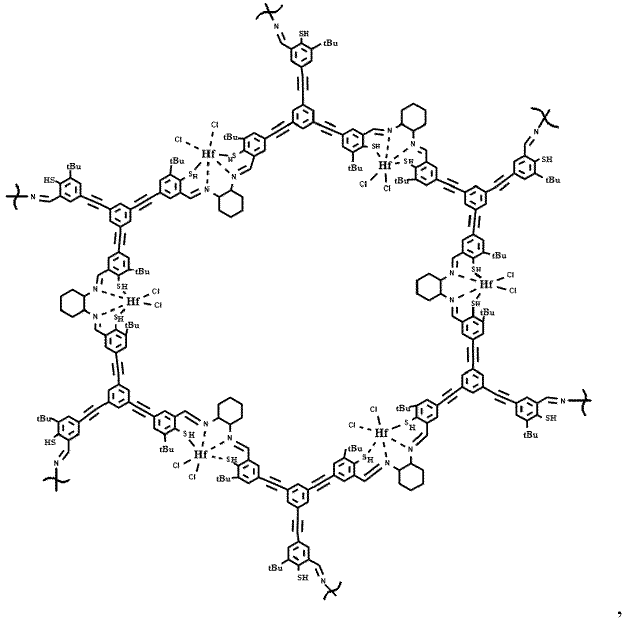 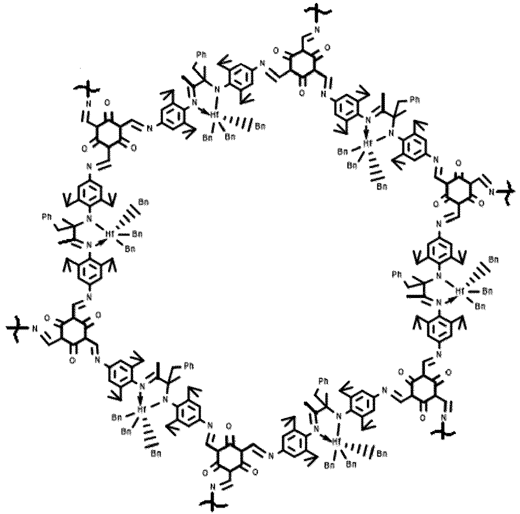 and

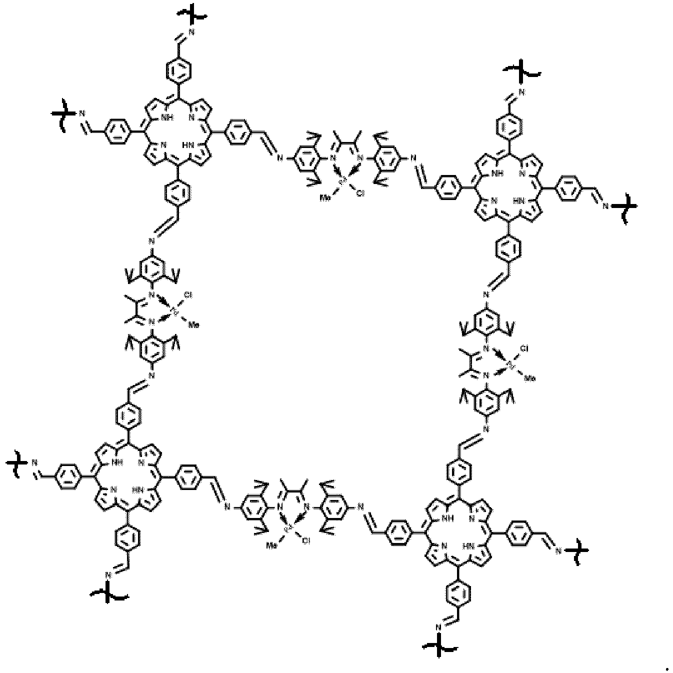

In some embodiments of the second aspect of the present invention, the catalyst is an olefin polymerization catalyst, preferably a supported olefin polymerization catalyst.

The third aspect of the present invention relates to a method for preparing the covalent organic framework material described in the first aspect of the present invention, comprising the following steps:
in a reaction medium, reacting a diamino-containing aliphatic compound with a multi-formyl-containing aromatic compound, or reacting a diamino-containing aromatic compound with a multi-formyl-containing aromatic compound, at a reaction temperature of 100°C to 140°C (e.g., 110°C, 120°C, 130°C), for a reaction time of 0.5 to 8 days (e.g., 1, 2, 3, 4, 5, 7 days), to obtain the covalent organic framework material.

In some embodiments of the third aspect of the present invention, the molar ratio of the diamino-containing aliphatic compound or diamino-containing aromatic compound to the multi-formyl-containing aromatic compound is (0.4~5):1, such as 0.6:1, 0.83:1, 1:1, 1.25:1, 1.5:1, 1.6:1, 2:1, 3:1, 4:1.

In some embodiments of the third aspect of the present invention, the method has one or more of the following features (1) to (7):
(1) the diamino-containing aliphatic compound is selected from the group consisting of ethylenediamine and 1,2-cyclohexanediamine;
(2) the diamino-containing aromatic compound is selected from the group consisting of 1,2-phenylenediamine, tris(4-aminophenyl)amine and 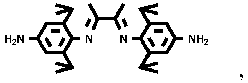 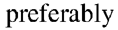 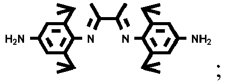
(3) the multi-formyl-containing aromatic compound is selected from the group consisting of aromatic dialdehyde, aromatic trialdehyde and aromatic tetraaldehyde; preferably, the multi-formyl-containing aromatic compound is selected from the group consisting of 2,2'-bipyridine-5,5'-diformaldehyde, 2,5-diformylfuran, 4,4'-(ethyn-1,2-diyl) dibenzaldehyde, tetrakis(4-formylphenyl)methane, 1,3,5-tris(3'-formyl- 4'-hydroxyphenyl)benzene, 1,3,5-tris(3'-formyl-4'-hydroxy-5'-isobutylphenyl)benzene, 1,3,5-tris(1'-ethynyl-3'-formyl-4'-hydroxyphenyl)benzene, 1,3,5-tris(1'-ethynyl-3'-formyl- 4'-hydroxy-5'-isobutylphenyl)benzene, 1,3,5-tris(3'-formyl-4'-mercaptophenyl)benzene, 1,3,5-tris(3'-formyl-4'-mercapto-5'-isobutylphenyl)benzene, 1,3,5-tris(1'-ethynyl-3'-formyl- 4'-mercaptophenyl)benzene, 1,3,5-tris(1'-ethynyl-3'-formyl-4'-mercapto- 5'-isobutylphenyl)benzene, 2,4,6-trihydroxy-1,3,5-triformyl benzene and tetraformylphenylporphyrin; more preferably, the multi-formyl-containing aromatic compound is selected from the group consisting of 1,3,5-tris(3'-formyl-4'-hydroxyphenyl)benzene, 1,3,5-tris(1'-ethynyl-3'-formyl-4'-mercaptophenyl)benzene, 2,4,6-trihydroxy-1,3,5-triformyl benzene and tetraformylphenylporphyrin;
(4) the reaction medium is at least one selected from the group consisting of trimethylbenzene (e.g., mesitylene), ethanol, tetrahydrofuran, dioxane, acetic acid and water;
   preferably, the reaction medium is a trimethylbenzene-ethanol mixed solution, a tetrahydrofuran-ethanol mixed solution, a dioxane-ethanol-acetic acid-water mixed solution or a dioxane-trimethylbenzene mixed solution;
(5) the ratio of the volume of the reaction medium to the total molar amount of the diamino-containing aliphatic compound and multi-formyl-containing aromatic compound or to the total molar amount of the diamino-containing aromatic compound and the multi-formyl-containing aromatic compound is 10 to 100 ml/mol, such as 17, 18, 20, 21, 50, 80 ml/mol;
(6) before the reacting, the reaction system is subjected to deoxidization;
   preferably, the deoxidization is performed by cooling the reaction system in a liquid nitrogen environment under vacuum conditions and then returning to room temperature;
(7) after the reacting is completed, a reaction product is separated and purified;
   preferably, the reaction product is purified by washing and optionally extracting.

In some embodiments of the third aspect of the present invention, the multi-formyl-containing aromatic compound is selected from the group consisting of 1,3,5-tris(3'-formyl-4'-hydroxyphenyl)benzene, 1,3,5-tris(1'-ethynyl-3'-formyl-4'- mercaptophenyl)benzene, 2,4,6-trihydroxy-1,3,5-triformyl benzene, and tetraformylphenylporphyrin.

In some embodiments of the third aspect of the present invention, in item (7) above, the reaction product is washed with at least one selected from the group consisting of acetone, N,N-dimethylacetamide and water.

In some embodiments of the third aspect of the present invention, in item (7) above, the washing is performed one to three times.

In some embodiments of the third aspect of the present invention, in item (7) above, the extracting is performed with tetrahydrofuran.

The fourth aspect of the present invention relates to a method for preparing the catalyst described in the second aspect of the present invention, comprising the following steps:
in a reaction medium, reacting the covalent organic framework material described in the first aspect of the present invention with a transition metal compound at a temperature not higher than room temperature for 5 hours to 120 hours, such as 10 hours, 18 hours, 20 hours, 30 hours, 40 hours, 42 hours, 50 hours, 60 hours, 72 hours, 80 hours, 90 hours, 100 hours, 110 hours.

In some embodiments of the fourth aspect of the present invention, the weight ratio of the covalent organic framework material to the transition metal compound is (0.1~10):1, such as 0.15:1, 0.25:1, 0.5:1, 1:1, 2 :1, 3:1, 4:1, 5:1, 7:1, 9:1.

In some embodiments of the fourth aspect of the present invention, the method has one or more features of the following items 1) to 6):
1) the transition metal compound is a compound comprising at least one metal selected from the group consisting of Sc, Ti, Zr, Hf, V, Cr, Mn, Fe, Ni and Pd;
   preferably, the transition metal compound is selected from the group consisting of zirconium tetrachloride, hafnium tetrachloride, tetrabenzyl hafnium, and methylated cyclopentadienyl palladium chloride;
2) the reacting is performed at room temperature, or the temperature during the reacting is elevated from -90°C--70°C (e.g., -80°C, -78°C, -75°C) to room temperature;
   preferably, the temperature is elevated at a rate of 0.5~2°C/min (e.g., 1°C/min, 1.5°C /min);
3) the reaction medium is selected from the group consisting of tetrahydrofuran, toluene and ether;
4) the ratio of the volume of the reaction medium to the total weight of the covalent organic framework material and the transition metal compound is 50:(1-6) ml/g;
5) the reacting is carried out under anhydrous and oxygen-free conditions;
6) after the reacting is completed, the reaction medium is removed, and a reaction product is washed one to three times; preferably, the washing is carried out with n-hexane.

The fifth aspect of the present invention relates to a catalyst product for olefin polymerization, comprising the catalyst described in the second aspect of the present invention and an optional co-catalyst.

In some embodiments of the fifth aspect of the present invention, the co-catalyst is selected from the group consisting of methylaluminoxane, triisobutylaluminum, triethylaluminum, trimethylaluminum and modified methylaluminoxane.

In some embodiments of the fifth aspect of the present invention, the weight ratio of the catalyst to the co-catalyst is 1:(4~130), such as 1:6.7, 1:20, 1:33.3, 1:40, 1:50, 1:60, 1:70, 1:80, 1:90, 1:100, 1:110, 1:120.

In some embodiments of the fifth aspect of the present invention, the catalyst product has a polymerization activity of 10³ to 10⁹ g-polymer/g-cat-bar-h, such as 4.6×10³ g·polymer/g·cat·bar·h, 9.8×10³ g-polymer/g-cat-bar-h, 1.9×10⁴ g·polymer/g·cat·bar·h, 2.7×10⁵ g·polymer/g·cat·bar·h, 3.1×10⁵ g-polymer/g-cat-bar-h, 8.1×10⁵ g·polymer/g·cat·bar·h, 5.8×10⁷ g·polymer/g·cat·bar·h, 6.1×10⁷ g-polymer/g-cat-bar-h, 6.4×10⁷ g·polymer/g·cat·bar·h, 7.9×10⁷ g·polymer/g·cat·bar·h, 8.1×10⁷ g-polymer/g-cat-bar-h, 9.1×10⁷ g·polymer/g·cat·bar·h, 1.2×10⁸ g·polymer/g·cat·bar·h, 1.9×10⁸ g·polymer/g·cat·bar·h at 30°C to 250°C (e.g., 40°C, 45°C, 50°C, 55°C, 60°C, 65°C, 90°C, 100°C, 140°C, 160°C, 200°C).

The sixth aspect of the present invention relates to a method for olefin polymerization, comprising using the catalyst described in the second aspect of the present invention or the catalyst product described in the fifth aspect of the present invention to catalyze olefin polymerization.

In some embodiments of the sixth aspect of the present invention, the olefin is selected from the group consisting of ethylene, propylene, linear or branched α-olefin containing 4-20 carbon atoms, conjugated diene containing 4-20 carbon atoms, non-conjugated polyene containing 5-20 carbon atoms, cycloolefin containing 5-20 carbon atoms, and arylethylene containing 5-20 carbon atoms.

In some embodiments of the sixth aspect of the present invention, the olefin is selected from the group consisting of ethylene, propylene, 1-butene, butadiene, 1-hexene, 1-octene and styrene.

In some embodiments of the sixth aspect of the present invention, the olefin polymerization is selected from the group consisting of olefin gas-phase polymerization, olefin solution polymerization, olefin bulk polymerization and olefin slurry polymerization.

The seventh aspect of the present invention relates to a use of the catalyst described in the second aspect of the present invention or the catalyst product described in the fifth aspect of the present invention in catalyzing olefin polymerization.

In some embodiments of the seventh aspect of the present invention, the olefin is selected from the group consisting of ethylene, propylene, linear or branched α-olefin containing 4-20 carbon atoms, conjugated diene containing 4-20 carbon atoms, non-conjugated polyene containing 5-20 carbon atoms, cycloolefin containing 5-20 carbon atoms and arylethylene containing 5-20 carbon atoms.

In some embodiments of the seventh aspect of the present invention, the olefin is selected from the group consisting of ethylene, propylene, 1-butene, butadiene, 1-hexene, 1-octene, and styrene.

In some embodiments of the seventh aspect of the present invention, the olefin polymerization is selected from the group consisting of olefin gas-phase polymerization, olefin solution polymerization, olefin bulk polymerization and olefin slurry polymerization.

The catalyst described in the second aspect of the present invention or the catalyst product described in the fifth aspect of the present invention is used in catalyzing olefin polymerization.

In some embodiments of the present invention, the olefin polymerization is selected from the group consisting of olefin gas-phase polymerization, olefin solution polymerization, olefin bulk polymerization and olefin slurry polymerization.

In some embodiments of the present invention, the olefin is selected from the group consisting of ethylene, propylene, linear or branched α-olefin containing 4-20 carbon atoms, conjugated diene containing 4-20 carbon atoms, non-conjugated polyene containing 5-20 carbon atoms, cycloolefin containing 5-20 carbon atoms, and arylethylene containing 5-20 carbon atoms.

In some embodiments of the present invention, the olefin is selected from the group consisting of ethylene, propylene, 1-butene, butadiene, 1-hexene, 1-octene and styrene.

The present invention also relates to a covalent organic framework material prepared by the method described in the third aspect of the present invention.

The present invention also relates to a catalyst prepared by the method described in the fourth aspect of the present invention.

In the present invention, if there is no other description, wherein:
The term "C₁₋₆ alkyl" refers to a hydrocarbonyl formed by removing one hydrogen atom from a C₁₋₆ alkane molecule. Examples include C₁₋₄ alkyl, C₁₋₂ alkyl; specific examples include but are not limited to methyl, ethyl, n-propyl, isopropyl, n-butyl, isobutyl, sec-butyl, tert-butyl, etc.

The term "C₁₋₆ alkylene" refers to a divalent group formed by removing one hydrogen atom from a C₁₋₆ alkyl; wherein, "C₁₋₆ alkyl" is as defined above. Examples include C₁₋₄ alkylene, C₁₋₂ alkylene.

The term "C₁₋₆ alkoxy" refers to a group formed in the form of C₁₋₆ alkyl-O-, wherein "C₁₋₆ alkyl" is as defined above. Examples include C₁₋₄ alkoxy, C₁₋₂ alkoxy; specific examples include but are not limited to methoxy, ethoxy, n-propoxy, isopropoxy, n-butoxy, isobutoxy, sec-butoxy, tert-butoxy, etc.

The term "C₅₋₈ cycloalkyl ring" refers to a monocyclic saturated alkyl ring, and the C₅₋₈ cycloalkyl ring contains 5-8 carbon atoms. Examples include C₅₋₇ cycloalkyl ring, C₅₋₆ cycloalkyl ring; specific examples include but are not limited to cyclobutyl ring, cyclopentyl ring, cyclohexyl ring and the like.

The term "oxo" refers to a group in the form of =O.

The term "alicyclic ring" refers to a carbocyclic ring formed by connecting 3 or more carbon atoms, there may be a single bond, double bond or triple bond between two adjacent carbon atoms in the ring, and the number of rings may be one or more, and it can be a saturated alicyclic ring or an unsaturated alicyclic ring, the former can be, for example, cycloalkyl, and the latter can be, for example, cycloalkenyl, cycloalkynyl and so on. Examples include C₄₋₁₂ saturated alicyclic ring, C₅₋₁₀ saturated alicyclic ring; specific examples include but are not limited to cyclohexyl, cyclopropyl and the like.

The term "C₅₋₁₀ aromatic ring" refers to an aromatic monocyclic or polycyclic compound. Examples include C₅₋₈ aromatic ring, C₅₋₇ aromatic ring; specific examples include but are not limited to phenyl, naphthyl, anthracenyl, phenanthryl and the like.

The term "heteroaromatic ring" refers to an aromatic monocyclic or polycyclic compound containing at least one heteroatom such as N, O or S. Examples include 10- to 30-membered heteroaromatic ring, 5- to 10-membered heteroaromatic ring, 5- to 8-membered heteroaromatic ring, 5- to 7-membered heteroaromatic ring, 5- to 6-membered heteroaromatic ring; specific examples include but are not limited to porphyryl ring, pyrazolyl ring, pyrrolyl ring, thiazolyl ring, pyridinyl ring, imidazolyl ring, quinolinyl ring, etc.

The term "co-catalyst" refers to a substance itself having no activity or little activity, but can change some properties such as electronic structure, ion valence state, acidity and alkalinity, surface structure, grain size, etc. of the catalyst, so as to improve the activity, selectivity, toxicity resistance or stability of the catalyst.

The term "coordination bond" also referred to as coordinate bond is a special covalent bond. A coordination bond is formed when the electron pair shared in a covalent bond is supplied by one atom alone and the empty orbital is provided by another atom.

The term "substituted" means that one or more (e.g., one, two, three, four) hydrogens in a group are optionally replaced by substituents.

The present invention has achieved the following beneficial effects:
1. The covalent organic framework material of the present invention has a certain catalytic activity, and at the same time, it can be used as a support of olefin polymerization catalyst, and the orientated polymerization of olefin in a confined space can be controlled by the regular pore structure of the support.
2. In the present invention, a novel olefin polymerization catalyst is obtained by coordination bonding the covalent organic framework material with a transition metal compound, and the catalyst has high catalytic activity and good high-temperature stability, thereby broadening the range of olefin polymerization catalysts and making further development of olefin polymerization catalysts.

### Specific Models for Carrying Out the present invention

The embodiments of the present invention will be clearly and completely described below in conjunction with the examples. Apparently, the described examples are only some of the examples of the present invention, not all of them. The following description of at least one exemplary example is merely illustrative in nature and in no way taken as limiting the present invention, its application or uses. Based on the examples of the present invention, all other examples obtained by persons of ordinary skill in the art without creative efforts fall within the protection scope of the present invention.

### Example 1: Preparation of covalent organic framework material multidentate ligand 1 and catalyst 1

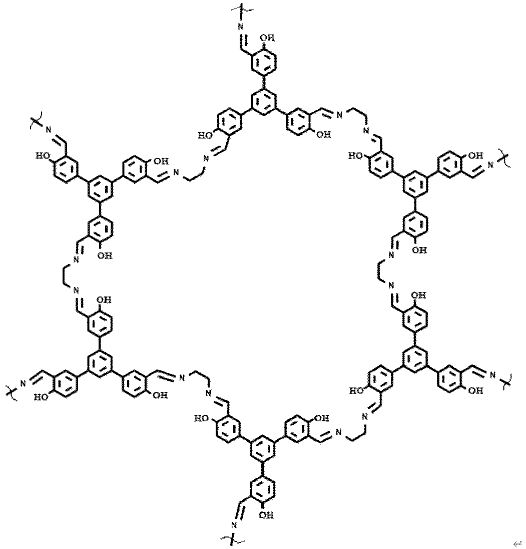

### Covalent organic framework material multidentate ligand 1

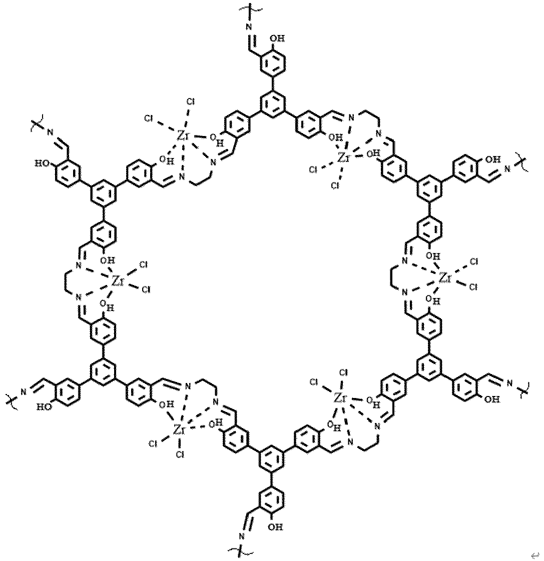

### Ring structural unit of catalyst 1

1mol of 1,3,5-tris(3'-formyl-4'-hydroxyphenyl)benzene and 1mol of ethylenediamine were added to 100 ml of a mixed solution of 1,3,5-trimethylbenzene and ethanol (ethanol accounted for 50% by volume) or a mixed solution of tetrahydrofuran and ethanol (ethanol accounted for 50% by volume), reacted at 120°C for 3 days, and filtered, the residue was taken and washed with acetone three times to obtain the covalent organic framework material multidentate ligand 1.

300mg of the covalent organic framework material multidentate ligand 1 was reacted with 2g of zirconium tetrachloride in 50ml of dry tetrahydrofuran liquid for 72h. During the reaction, the temperature was raised from -78°C to room temperature at a rate of 1 °C/min. The obtained catalyst 1 had crystal plane positions in the XRD pattern as follows: (100) 3.5Å, (110) 6.1Å, (200) 7Å, (210) 9.3Å, (001)22.0Å.

### Example 2: Preparation of covalent organic framework material multidentate ligand 2 and catalyst 2

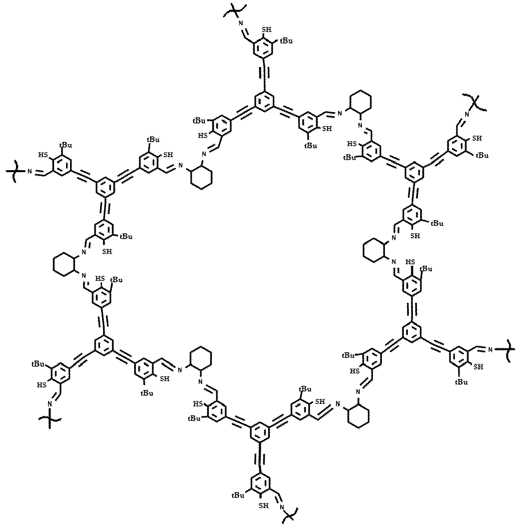

### Covalent organic framework material multidentate ligand 2 (tBu represents tert-butyl)

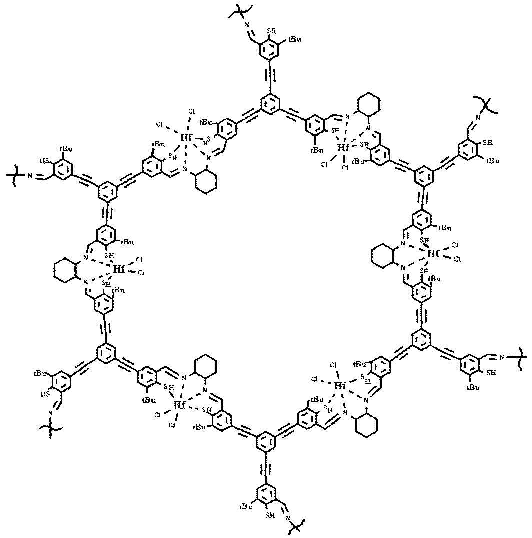

### Ring structural unit of catalyst 2 (tBu represents tert-butyl)

0.5 mol of 1,3,5-tris(1'-ethynyl-3'-formyl-4'-mercaptophenyl)benzene was dissolved in 16 ml of dioxane, then added with 0.8 mol of 1,2-cyclohexanediamine, 5 ml of ethanol and 6 ml of 2 mol/L acetic acid solution, then the mixed solution was cooled under vacuum for 15min in a liquid nitrogen environment, then slowly heated to room temperature, and then the mixed solution was reacted in an oil bath at 120°C for three days to obtain a yellow solid, then the yellow solid was washed three times with acetone and extracted with tetrahydrofuran to obtain the purified covalent organic framework material multidentate ligand 2.

500 mg of the covalent organic framework material multidentate ligand 2 was reacted with 2 g of hafnium tetrachloride in 50 ml of dry tetrahydrofuran liquid for 72 hours. During the reaction, the temperature was raised from -78°C to room temperature at a rate of 1°C/min. Catalyst 2 was obtained, which had crystal plane positions in the XRD pattern as follows: (100) 2.7Å, (110) 4.7Å, (200) 5.4Å, (210) 7.2Å, (220) 9.4Å, (001) 16Å.

### Example 3: Preparation of covalent organic framework material multidentate ligand 3 and catalyst 3

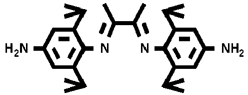

### Diamine monomer B

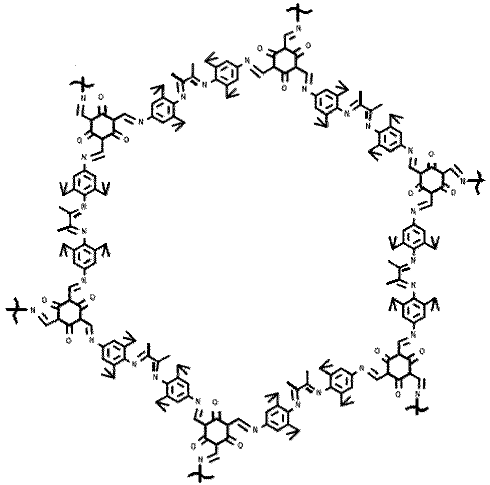

### Covalent organic framework material multidentate ligand 3

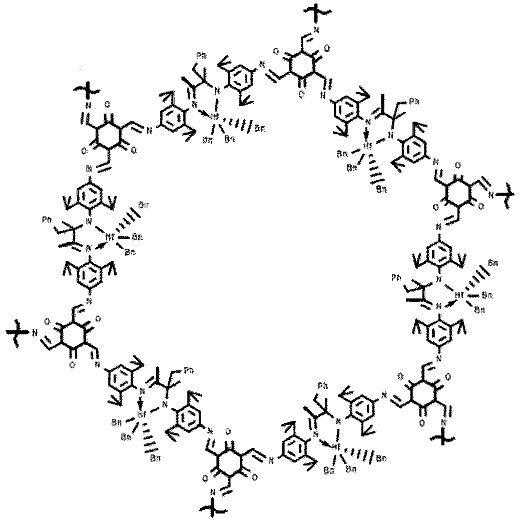

### The structural unit of catalyst 3 (Bn represents benzyl)

0.6 mol of diamine monomer B and 0.4 mol of 2,4,6-trihydroxy-1,3,5-triformyl benzene were dissolved in a mixed solution of 40ml of dioxane and 40ml of mesitylene; after the solvent being deoxidized, the reaction was carried out at 120°C for 72 h, and the obtained reaction product was washed with N,N-dimethylacetamide, water and acetone in sequence to obtain the covalent organic framework material multidentate ligand 3.

Under anhydrous and oxygen-free conditions, 500 mg of the dried and purified covalent organic framework material multidentate ligand 3 was added into 50 ml of toluene, then added with 1 g of tetrabenzyl hafnium at room temperature, stirred and reacted at room temperature for 42 h, and after the solvent being removed by suction, the reaction product was washed with n-hexane three times, 40ml of n-hexane for each time, and the solvent was removed by suction to obtain catalyst 3. Catalyst 3 had crystal plane positions in the XRD pattern as follows: (100) 3.0 Å, (110) 5.2 Å, (200) 6.0 Å, (120) 7.9 Å, (300) 8.9 Å, (220) 10.3 Å, (001) 14.1 Å.

### Example 4: Preparation of covalent organic framework material multidentate ligand 4 and catalyst 4

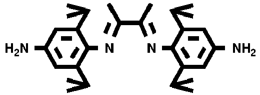

### Diamine monomer B

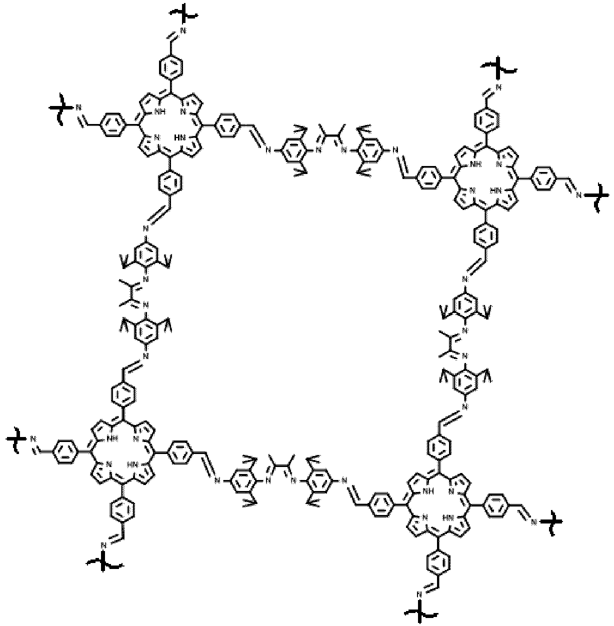

### Covalent organic framework material multidentate ligand 4

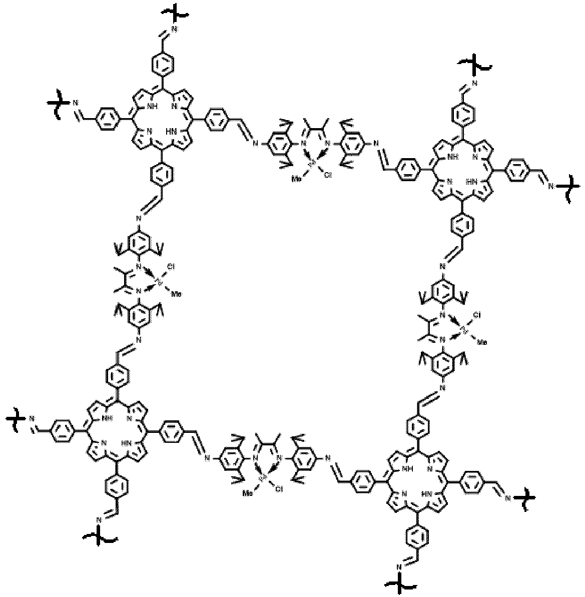

### Ring structural unit of catalyst 4

0.5 mol of diamine monomer B and 0.6 mol of tetraformylphenylporphyrin were dissolved in a mixed solution of 10ml of dioxane and 10ml of mesitylene, reacted at 120°C for 72h, and the obtained reaction product was washed with acetone three times to obtain the covalent organic framework material multidentate ligand 4.

Under anhydrous and oxygen-free conditions, 500 mg of the dried and purified covalent organic framework material multidentate ligand 4 and 1 g of methylated cyclopentadiene palladium chloride were added into 25 ml of freshly refluxed diethyl ether and reacted at 25 °C for 18 hours to coordinate metal palladium to the ligand to obtain catalyst 4. Catalyst 4 had crystal plane positions in XRD pattern as follows: (100) 2.7 Å, (110) 3.8 Å, (200) 5.4 Å, (300) 8.1 Å, (001) 14.7 Å.

### Example 5: Use of catalyst 1 for the slurry homopolymerization of ethylene

A 2-liter autoclave was vacuumized at 140°C for 3 hours, then 1.5L of n-hexane was added into the autoclave, the ethylene pressure in the autoclave was adjusted to 40bar, the temperature in the autoclave was adjusted to 50°C, 10mg of catalyst 1 and 500mg of methylaluminoxane were added, and reacted for 1 hour to obtain a polyethylene product. The polyethylene had a molecular weight of 500 kg/mol, and the catalyst had a reactivity of 9.8×10³ g·polymer/g·cat·bar·h.

### Example 6: Use of catalyst 1 for the slurry homopolymerization of propylene

A 2-liter autoclave was vacuumized at 140°C for 3 hours, then 1.5L of n-hexane was added into the autoclave, the pressure of propylene in the autoclave was adjusted to 35bar, the temperature in the autoclave was adjusted to 60°C, and 5mg of catalyst 1 and 500mg of triisobutylaluminum were added, and reacted for 1 hour to obtain a polypropylene product, the polypropylene had a molecular weight of 75 kg/mol, and the catalyst had a reactivity of 4.6×10³ g·polymer/g·cat·bar·h.

### Example 7: Use of catalyst 1 for the homopolymerization of 1,3-butadiene

A 2-liter autoclave was vacuumized at 140°C for 3 hours, then 1.5L of n-hexane was added into the autoclave, the pressure of 1,3-butadiene in the autoclave was adjusted to 5 bar, the temperature in the autoclave was adjusted to 90°C, and 15 mg of catalyst 1 and 100 mg of methylaluminoxane were added, and reacted for 1 hour to obtain a poly-1,3-butadiene product with a molecular weight of 308 kg/mol, and the catalyst had a reactivity of 1.9×10⁴ g·polymer/g·cat·bar·h.

### Example 8: Use of catalyst 1 for solution copolymerization of ethylene/1-octene

A 2-liter autoclave was vacuumized at 140°C for 3 hours, then 1.5L of n-hexane was added into the autoclave, the ethylene pressure in the autoclave was adjusted to 15bar, the temperature in the autoclave was adjusted to 40°C, and 5mg of catalyst 1, 500 mg of triethylaluminum and 50 ml of 1-octene were added, and reacted for 1 hour to obtain an ethylene-octene copolymer with a molecular weight of 584 kg/mol, and the catalyst had a reactivity of 2.7×10⁵ g-polymer/g-cat-bar-h.

### Example 9: Use of catalyst 2 for the slurry homopolymerization of ethylene

A 2-liter autoclave was vacuumized at 140°C for 3 hours, then 1.5L of n-hexane was added into the autoclave, the ethylene pressure in the autoclave was adjusted to 15bar, the temperature in the autoclave was adjusted to 50°C, 5mg of catalyst 2 and 300 mg of triethylaluminum were added, and reacted for 1 hour to obtain a polyethylene product with a molecular weight of 43 kg/mol, and the catalyst had a reactivity of 1.9×10⁸ g·polymer/g·cat·bar·h.

### Example 10: Use of catalyst 2 for the slurry homopolymerization of propylene

A 2-liter autoclave was vacuumized at 140°C for 3 hours, then 1.5L of n-hexane was added into the autoclave, the pressure of propylene in the autoclave was adjusted to 35bar, the temperature in the autoclave was adjusted to 60°C, and 5mg of catalyst 2 and 500mg of triisobutylaluminum were added, and reacted for 1 hour to obtain a polypropylene product with a molecular weight of 34 kg/mol, and the catalyst had a reactivity of 7.9×10⁷ g-polymer/g-cat-bar-h.

### Example 11: Use of catalyst 2 for the homopolymerization of 1,3-butadiene

A 2-liter autoclave was vacuumized at 140°C for 3 hours, then 1.5L of n-hexane was added into the autoclave, the pressure of 1,3-butadiene in the autoclave was adjusted to 15bar, the temperature in the autoclave was adjusted to 55°C, and 15mg of catalyst 2 and 500mg of triethylaluminum were added, and reacted for 1 hour to obtain a poly-1,3-butadiene product with a molecular weight of 62 kg/mol, and the catalyst had a reactivity of 1.2×10⁸ g·polymer/g·cat·bar·h.

### Example 12: Use of catalyst 2 for solution copolymerization of ethylene/1-octene

A 2-liter autoclave was vacuumized at 140°C for 3 hours, then 1.5L of n-hexane was added into the autoclave, the ethylene pressure in the autoclave was adjusted to 20bar, the temperature in the autoclave was adjusted to 50°C, and 5mg of catalyst 2, 500 mg of triethylaluminum and 50 ml of 1-octene were added, and reacted for 1 hour to obtain an ethylene-octene copolymer with a molecular weight of 87 kg/mol, and the catalyst had a reactivity of 9.1×10⁷ g·polymer/g·cat·bar·h.

### Example 13: Use of catalyst 3 for the slurry homopolymerization of ethylene

A 2-liter autoclave was vacuumized at 140°C for 3 hours, then 1.5L of toluene was added into the autoclave, the ethylene pressure in the autoclave was adjusted to 25bar, the temperature in the autoclave was adjusted to 140°C, and 5mg of catalyst 3 and 300 mg of triisobutylaluminum were added, and reacted for 1 hour to obtain a polyethylene product with a molecular weight of 87 kg/mol, and the catalyst had a reactivity of 8.1×10⁵ g·polymer/g·cat·bar·h.

### Example 14: Use of catalyst 3 for the slurry homopolymerization of propylene

A 2-liter autoclave was vacuumized at 140°C for 3 hours, then 1.5L of n-hexane was added into the autoclave, the pressure of propylene in the autoclave was adjusted to 35 bar, the temperature in the autoclave was adjusted to 200°C, and 10 mg of catalyst 3 and 500 mg of triisobutylaluminum were added, and reacted for 1 hour to obtain a polypropylene product with a molecular weight of 87 kg/mol, and the catalyst had a reactivity of 3.1×10⁵ g-polymer/g-cat-bar-h.

### Example 15: Use of catalyst 3 for the homopolymerization of 1,3-butadiene

A 2-liter autoclave was vacuumized at 140°C for 3 hours, then 1.5L of n-hexane was added into the autoclave, the pressure of 1,3-butadiene in the autoclave was adjusted to 5bar, the temperature in the autoclave was adjusted to 160°C, and 10 mg of catalyst 3 and 500 mg of triisobutylaluminum were added, and reacted for 0.5 h to obtain a poly-1,3-butadiene product with a molecular weight of 87 kg/mol, and the catalyst had a reactivity of 9.1×10⁷ g·polymer/g·cat·bar·h.

### Example 16: Use of catalyst 3 for solution copolymerization of ethylene/1-octene

A 2-liter autoclave was vacuumized at 140°C for 3 hours, then 1.5L of ultra-dry toluene was added into the autoclave, the ethylene pressure in the autoclave was adjusted to 15bar, the temperature in the autoclave was adjusted to 100°C, and 5 mg of catalyst 3, 500 mg of methylaluminoxane and 100 ml of 1-octene were added, and reacted for 1 hour to obtain an ethylene-octene copolymer with a molecular weight of 73 kg/mol, and the catalyst had a reactivity of 8.1×10⁷ g·polymer/g·cat·bar·h.

### Example 17: Use of catalyst 4 for the slurry homopolymerization of ethylene

A 2-liter autoclave was vacuumized at 140°C for 3 hours, then 1.5L of n-hexane was added into the autoclave, the ethylene pressure in the autoclave was adjusted to 35bar, the temperature in the autoclave was adjusted to 65°C, and 10mg of catalyst 4 and 600 mg of trimethylaluminum were added, and reacted for 1.5 h to obtain a polyethylene product with a molecular weight of 976 kg/mol, and the catalyst had a reactivity of 6.4×10⁷ g·polymer/g·cat·bar·h.

### Example 18: Use of catalyst 4 for the slurry homopolymerization of propylene

A 2-liter autoclave was vacuumized at 140°C for 3 hours, then 1.5L of n-hexane was added into the autoclave, the pressure of propylene in the autoclave was adjusted to 5bar, the temperature in the autoclave was adjusted to 45°C, and 10mg of catalyst 4 and 500 mg of methylaluminoxane were added, and reacted for 0.5 h to obtain a polypropylene product with a molecular weight of 872 kg/mol, and the catalyst had a reactivity of 5.8×10⁷ g·polymer/g·cat·bar·h.

### Example 19: Use of catalyst 4 for the homopolymerization of 1,3-butadiene

A 2-liter autoclave was vacuumized at 140°C for 3 hours, then 1.5L of n-hexane was added into the autoclave, the pressure of 1,3-butadiene in the autoclave was adjusted to 25bar, the temperature in the autoclave was adjusted to 65°C, and 25 mg of catalyst 4 and 500 mg of modified methylaluminoxane were added, and reacted for 2 hours to obtain a poly-1,3-butadiene product with a molecular weight of 932 kg/mol, and the catalyst had a reactivity of 6.1×10⁷ g·polymer/g·cat·bar·h.

### Comparative Example

1 mol of 1,3,5-tris(3'-formyl-4'-hydroxy-5'-isobutylphenyl)benzene and 1mol of ethylenediamine were added into 100ml of a mixed solution of 1,3,5-trimethylbenzene and ethanol (ethanol accounted for a ratio of 50%) or a mixed solution of tetrahydrofuran and ethanol (ethanol accounted for a ratio of 50%), 0.5mol of manganese acetate hydrate was added simultaneously, and reacted at 120°C for 3 days. After separation and purification, a manganese coordination covalent organic framework material multidentate ligand was obtained.

The prepared manganese coordination covalent organic framework material multidentate ligand was used for olefin polymerization and showed no reactivity.

Finally, it should be noted that: the above examples are only used to illustrate the technical solutions of the present invention and not to limit them; although the present invention has been described in detail with reference to the preferred examples, those of ordinary skill in the art should understand that: the specific models of the present invention can still be modified or equivalently replaced in some technical features without departing from the spirit of the technical solution of the present invention, and these changes should fall within the scope of the technical solutions sought to be protected in the present invention.

## Claims

1. A covalent organic framework material, which is a two-dimensional polymer formed by repeatedly arranging and covalently bonding structural units as shown in Formula I or Formula II; 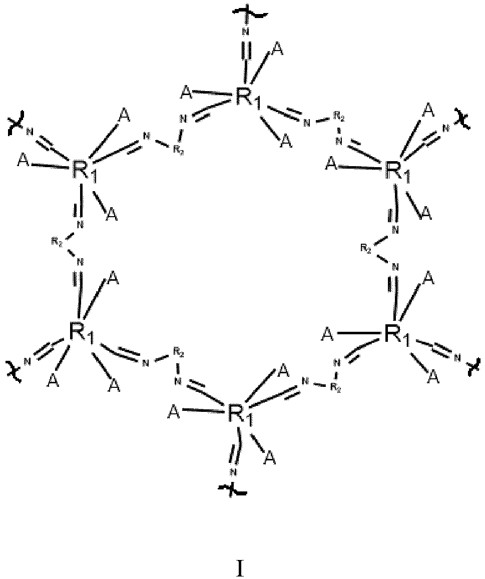 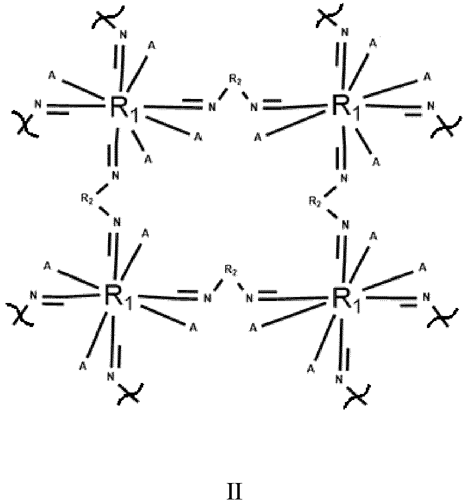 wherein,
R₁ is selected from the group consisting of 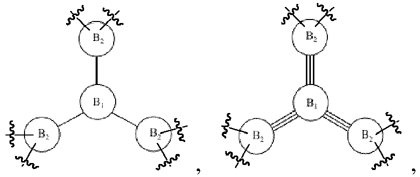 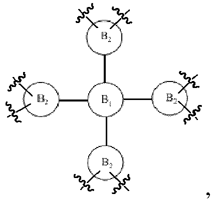 and C₄₋₁₂ saturated alicyclic ring, wherein, B₁ ring and B₂ ring are each independently selected from the group consisting of substituted or unsubstituted C₅₋₁₀ aromatic ring, substituted or unsubstituted 10- to 30-membered heteroaromatic ring, wherein the substituted C₅₋₁₀ aromatic rings and the substituted 10- to 30-membered heteroaromatic rings are each independently substituted by one or more of the following substituents: H, C₁₋₆ alkyl, C₁₋₆ alkoxy, hydroxyl, mercapto, amino;
R₂ is selected from the group consisting of C₁₋₆ alkylene, C₄₋₁₂ saturated alicyclic ring and 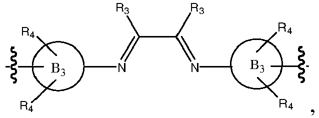 wherein, B₃ ring is a substituted or unsubstituted C₅₋₁₀ aromatic ring, R₃ and R₄ are each independently selected from the group consisting of substituted or unsubstituted C₁₋₆ alkyl, substituted or unsubstituted C₁₋₆ alkoxy, wherein the substituted C₅₋₁₀ aromatic ring, the substituted C₁₋₆ alkyls and the substituted C₁₋₆ alkoxys are each independently substituted by one or more of the following substituents: H, halogen, hydroxyl, amino;
A is selected from the group consisting of H, oxo, hydroxyl, mercapto, amino, C₁₋₆ alkyl and C₁₋₆ alkoxy.

2. The covalent organic framework material according to claim 1, wherein,
R₁ is selected from the group consisting of 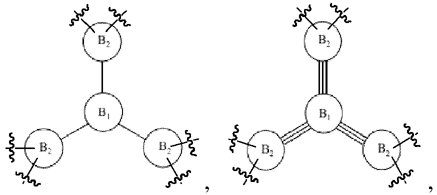 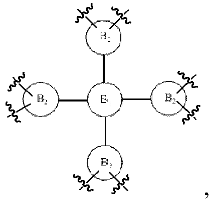 and C₅₋₁₀ saturated alicyclic ring, wherein, B₁ ring and B₂ ring are each independently selected from the group consisting of substituted or unsubstituted C₅₋₈ aromatic ring, substituted or unsubstituted 16- to 30-membered heteroaromatic ring, wherein the substituted C₅₋₈ aromatic rings and the substituted 16- to 30-membered heteroaromatic rings are each independently substituted by one or more of the following substituents: H, C₁₋₆ alkyl, C₁₋₆ alkoxy;
preferably, R₁ is selected from the group consisting of 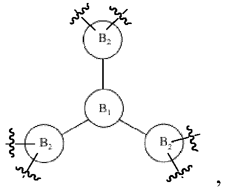 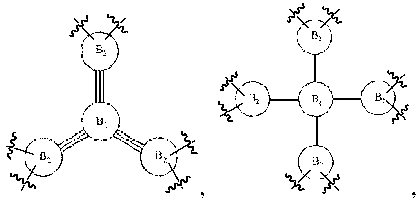 and C₅₋₈ cycloalkyl ring, wherein, B₁ ring and B₂ ring are each independently selected from the group consisting of substituted or unsubstituted C₅₋₈ aromatic ring, 20- to 30-membered heteroaromatic ring, wherein the substituted C₅₋₈ aromatic rings are each independently substituted by one or more C₁₋₆ alkyl groups;
more preferably, R₁ is selected from the group consisting of 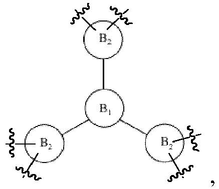 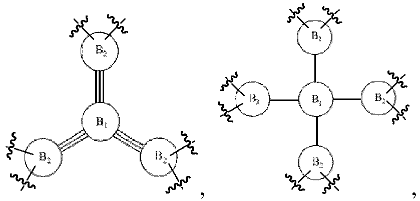 and cyclohexyl ring, wherein, B₁ ring is selected from the group consisting of phenyl ring and porphyrinyl ring, and B₂ is selected from the group consisting of phenyl ring and tert-butyl-substituted phenyl ring;
further preferably, R₁ is selected from the group consisting of

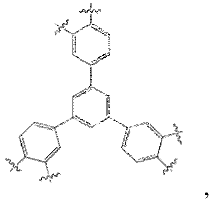

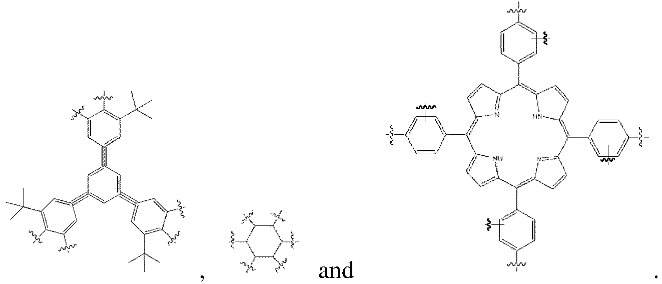

3. The covalent organic framework material according to claim 1 or 2, wherein,
R₂ is selected from the group consisting of C₁₋₆ alkylene, C₅₋₁₀ saturated alicyclic ring and 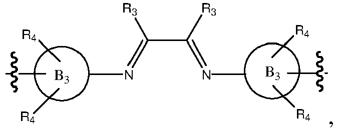 wherein, B₃ ring is a C₅₋₈ aromatic ring, and R₃ and R₄ are each independently selected from the group consisting of C₁₋₆ alkyl and C₁₋₆ alkoxy;
R₂ is selected from the group consisting of C₁₋₆ alkylene, C₅₋₈ cycloalkyl ring and 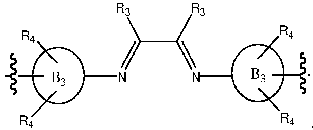 , wherein, B₃ ring is a phenyl ring, R₃ and R₄ are each independently selected from the group consisting of C₁₋₆ alkyl;
R₂ is selected from the group consisting of -(CH₂)₂-,

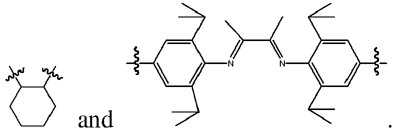

4. The covalent organic framework material according to any one of claims 1 to 3, wherein,
A is selected from the group consisting of H, oxo, hydroxyl, mercapto, amino, C₁₋₆ alkyl and C₁₋₆ alkoxy;
preferably, A is selected from the group consisting of H, oxo, hydroxyl and mercapto.

5. The covalent organic framework material according to any one of claims 1 to 4, wherein the structural unit is selected from: 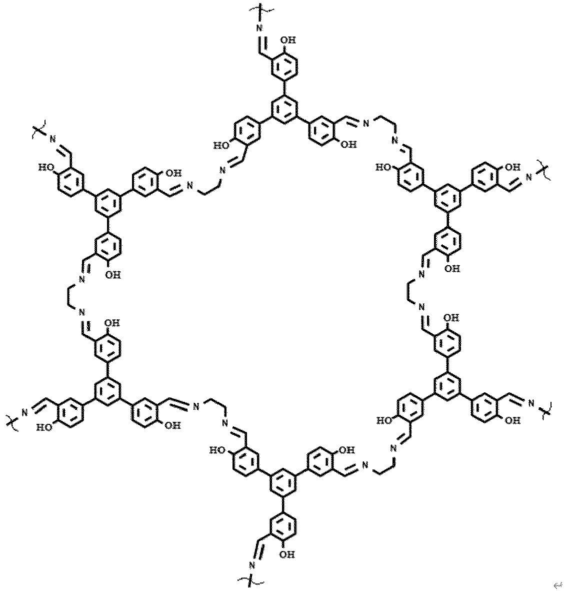 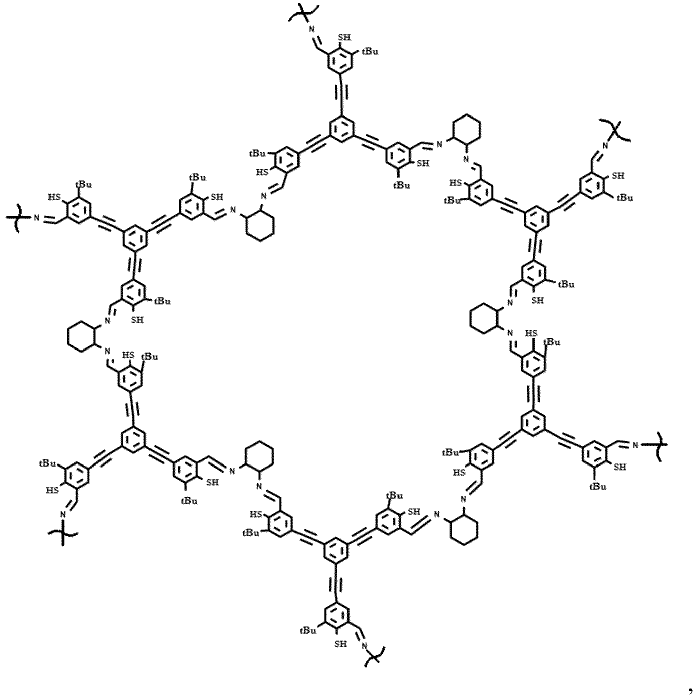 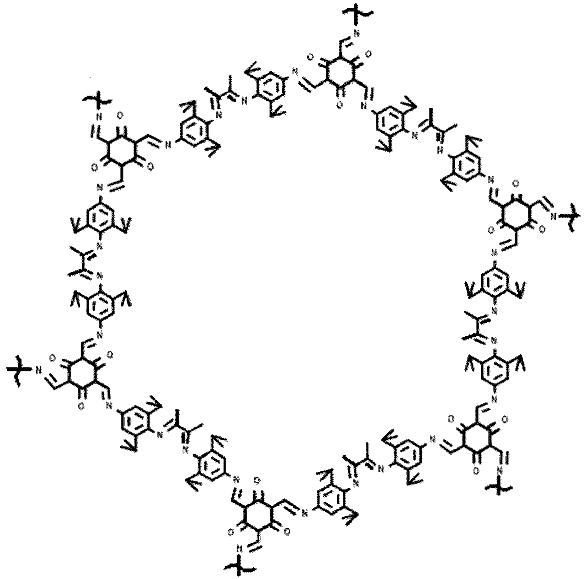 and

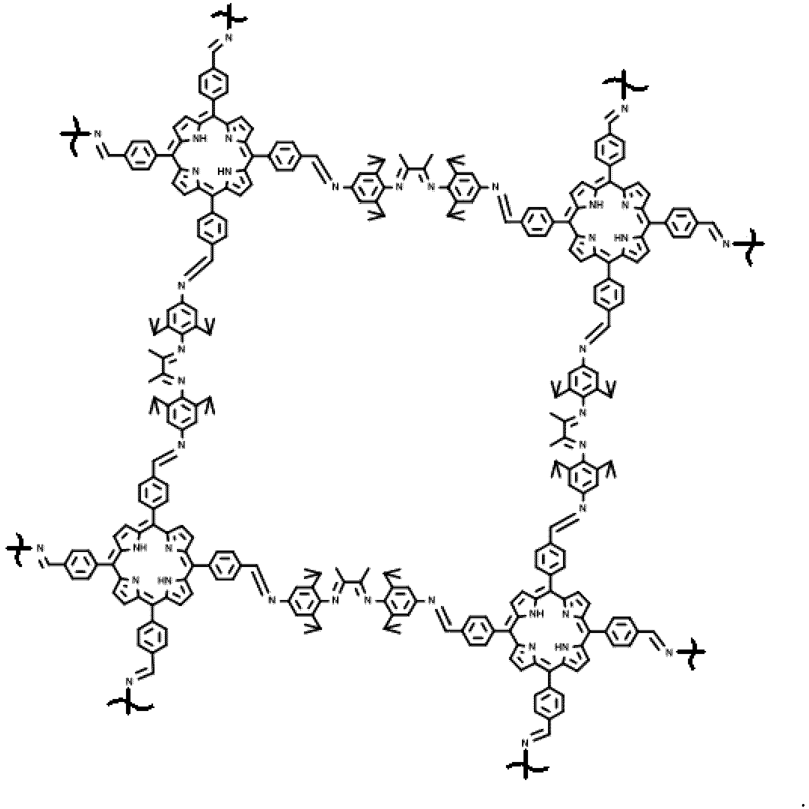

6. A catalyst, which is formed by bonding the covalent organic framework material according to any one of claims 1 to 5 and a transition metal compound through a coordination bond;
preferably, the transition metal compound is a compound comprising at least one selected from the group consisting of Sc, Ti, Zr, Hf, V, Cr, Mn, Fe, Ni and Pd;
more preferably, the transition metal compound is selected from the group consisting of zirconium tetrachloride, hafnium tetrachloride, tetrabenzyl hafnium and methylated cyclopentadienyl palladium chloride.

7. The catalyst according to claim 6, wherein,
when R₂ in the structural unit shown in Formula I or Formula II is selected from the group consisting of C₁₋₆ alkylene and C₄₋₁₂ saturated alicyclic ring, the transition metal atom forms coordination bonds with two nitrogen atoms and two A groups in the structural unit shown in Formula I or Formula II, respectively; or,
when R₂ in the structural unit shown in Formula I or Formula II is 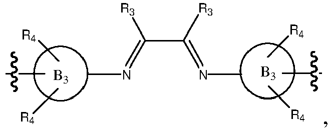 the transition metal atom forms a coordination bond with at least one nitrogen atom in R₂.

8. The catalyst according to claim 6 or 7, which is formed by repeatedly arranging and covalently bonding any one of the following cyclic structural units; 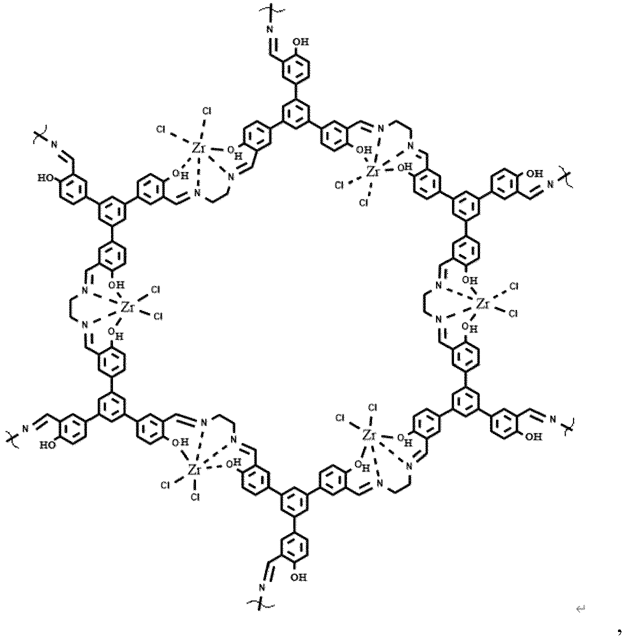 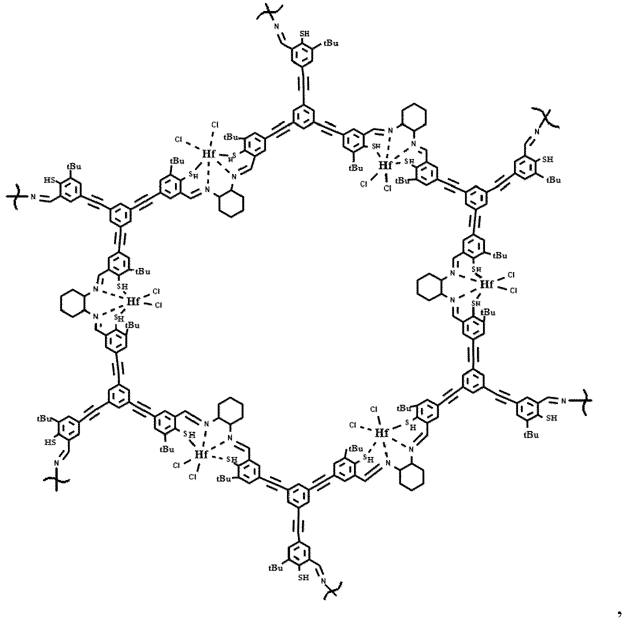 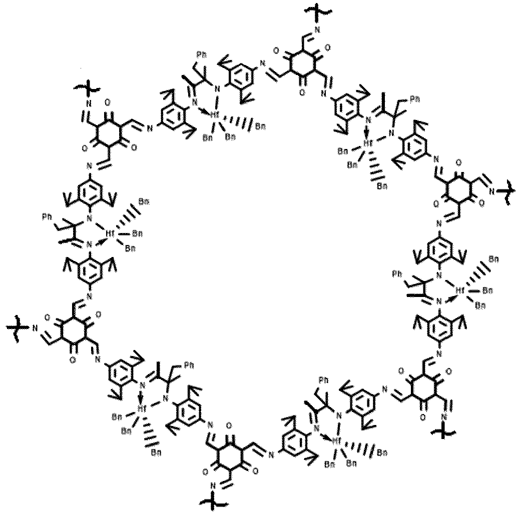 and

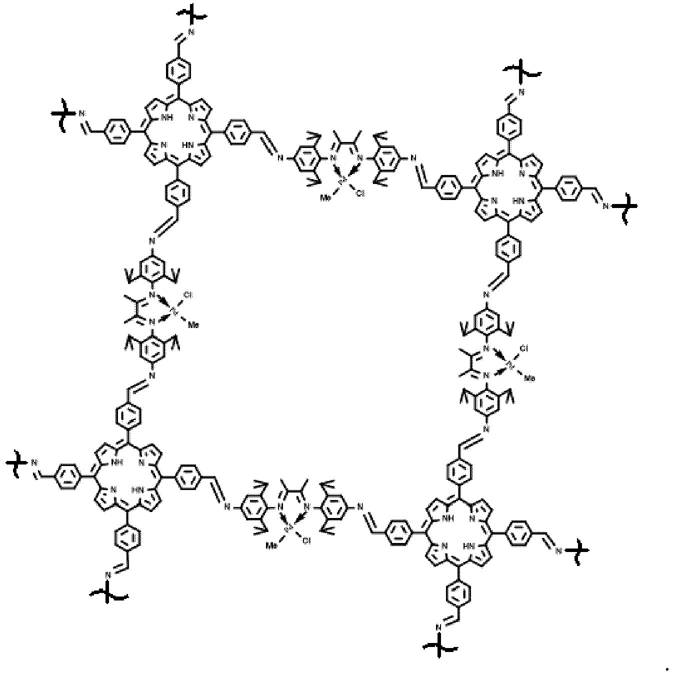

9. The catalyst according to any one of claims 6 to 8, which is an olefin polymerization catalyst, preferably a supported olefin polymerization catalyst.

10. A method for preparing the covalent organic framework material according to any one of claims 1 to 5, comprising the following steps:
in a reaction medium, reacting a diamino-containing aliphatic compound with a multi-formyl-containing aromatic compound, or reacting a diamino-containing aromatic compound with a multi-formyl-containing aromatic compound, at a reaction temperature of 100°C to 140°C, for a reaction time of 0.5 to 8 days;
preferably, the molar ratio of the diamino-containing aliphatic compound or diamino-containing aromatic compound to the multi-formyl-containing aromatic compound is (0.4~5):1.

11. The method according to claim 10, **characterized by** one or more of the following items (1) to (7):
(1) the diamino-containing aliphatic compound is selected from the group consisting of ethylenediamine and 1,2-cyclohexanediamine;
(2) the diamino-containing aromatic compound is selected from the group consisting of 1,2-phenylenediamine, tris(4-aminophenyl)amine and 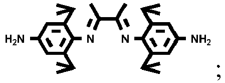
(3) the multi-formyl-containing aromatic compound is selected from the group consisting of aromatic dialdehyde, aromatic trialdehyde and aromatic tetraaldehyde; preferably, the multi-formyl-containing aromatic compound is selected from the group consisting of 2,2'-bipyridine-5,5'-diformaldehyde, 2,5-diformylfuran, 4,4'-(ethyn-1,2-diyl) dibenzaldehyde, tetrakis(4-formylphenyl)methane, 1,3,5-tris(3'-formyl-4'-hydroxyphenyl)benzene, 1,3,5-tris(3'-formyl-4'-hydroxy-5'-isobutylphenyl)benzene, 1,3,5-tris(1'-ethynyl-3'-formyl-4'-hydroxyphenyl)benzene, 1,3,5-tris(1'-ethynyl-3'-formyl- 4'-hydroxy-5'-isobutylphenyl)benzene, 1,3,5-tris(3'-formyl-4'-mercaptophenyl)benzene, 1,3,5-tris(3'-formyl-4'-mercapto-5'-isobutylphenyl)benzene, 1,3,5-tris(1'-ethynyl-3'-formyl- 4'-mercaptophenyl)benzene, 1,3,5-tris(1'-ethynyl-3'-formyl-4'-mercapto- 5'-isobutylphenyl)benzene, 2,4,6-trihydroxy-1,3,5-triformyl benzene and tetraformylphenylporphyrin; more preferably, the multi-formyl-containing aromatic compound is selected from the group consisting of 1,3,5-tris(3'-formyl-4'-hydroxyphenyl)benzene, 1,3,5-tris(1'-ethynyl-3'-formyl-4'-mercaptophenyl)benzene, 2,4,6-trihydroxy-1,3,5-triformyl benzene and tetraformylphenylporphyrin;
(4) the reaction medium is at least one selected from the group consisting of trimethylbenzene (e.g., mesitylene), ethanol, tetrahydrofuran, dioxane, acetic acid and water;
(5) the ratio of the volume of the reaction medium to the total molar amount of the diamino-containing aliphatic compound and the multi-formyl-containing aromatic compound or to the total molar amount of the diamino-containing aromatic compound and the multi-formyl-containing aromatic compound is 10 to 100 ml/mol, such as 17, 18, 20, 21, 50, 80 ml/mol;
(6) before the reacting, the reaction system is subjected to deoxidization;
(7) after the reacting is completed, a reaction product is separated and purified.

12. A method for preparing the catalyst according to any one of claims 6 to 9, comprising the following steps:
in a reaction medium, reacting the covalent organic framework material according to any one of claims 1 to 5 with a transition metal compound at a temperature not higher than room temperature for 5 hours to 120 hours;
preferably, the weight ratio of the covalent organic framework material to the transition metal compound is (0.1~10):1.

13. The method according to claim 12, **characterized by** one or more of the following items 1) to 6):
1) the transition metal compound is a compound comprising at least one metal selected from the group consisting of Sc, Ti, Zr, Hf, V, Cr, Mn, Fe, Ni and Pd;
preferably, the transition metal compound is selected from the group consisting of zirconium tetrachloride, hafnium tetrachloride, tetrabenzyl hafnium, and methylated cyclopentadienyl palladium chloride;
2) the reacting is performed at room temperature, or the temperature during the reacting is elevated from -90°C--70°C to room temperature;
3) the reaction medium is selected from the group consisting of tetrahydrofuran, toluene and ether;
4) the ratio of the volume of the reaction medium to the total weight of the covalent organic framework material and the transition metal compound is 50:(1-6) ml/g;
5) the reacting is carried out under anhydrous and oxygen-free conditions;
6) after the reacting is completed, the reaction medium is removed, and a reaction product is washed one to three times.

14. A catalyst product for olefin polymerization, comprising the catalyst according to any one of claims 6 to 9 and optionally a co-catalyst;
preferably, the co-catalyst is selected from the group consisting of methylaluminoxane, triisobutylaluminum, triethylaluminum, trimethylaluminum and modified methylaluminoxane;
preferably, the weight ratio of the catalyst to the co-catalyst is 1:(4-130);
preferably, the catalyst product has a polymerization activity of 10³ to 10⁹ g·polymer/g·cat·bar at 30°C to 250°C.

15. A method for olefin polymerization, comprising using the catalyst according to any one of claims 6 to 9 or the catalyst product according to claim 14 to catalyze olefin polymerization.

16. The method according to claim 15, wherein the olefin is selected from the group consisting of ethylene, propylene, linear or branched α-olefin containing 4-20 carbon atoms, conjugated diene containing 4-20 carbon atoms, non-conjugated polyene containing 5-20 carbon atoms, cycloolefin containing 5-20 carbon atoms and arylethylene containing 5-20 carbon atoms;
preferably, the olefin is selected from the group consisting of ethylene, propylene, 1-butene, butadiene, 1-hexene, 1-octene and styrene.

17. The method according to claim 15 or 16, wherein the olefin polymerization is selected from the group consisting of olefin gas-phase polymerization, olefin solution polymerization, olefin bulk polymerization and olefin slurry polymerization.

18. Use of the catalyst according to any one of claims 6 to 9 or the catalyst product according to claim 14 in catalyzing olefin polymerization;
preferably, the olefin is selected from the group consisting of ethylene, propylene, linear or branched α-olefin containing 4-20 carbon atoms, conjugated diene containing 4-20 carbon atoms, non-conjugated polyene containing 5-20 carbon atoms, cycloolefin containing 5-20 carbon atoms and arylethylene containing 5-20 carbon atoms;
more preferably, the olefin is selected from the group consisting of ethylene, propylene, 1-butene, butadiene, 1-hexene, 1-octene and styrene;
preferably, the olefin polymerization is selected from the group consisting of olefin gas-phase polymerization, olefin solution polymerization, olefin bulk polymerization and olefin slurry polymerization.

19. The catalyst according to any one of claims 6 to 9 or the catalyst product according to claim 14, for use in catalyzing olefin polymerization;
preferably, the olefin polymerization is selected from the group consisting of olefin gas-phase polymerization, olefin solution polymerization, olefin bulk polymerization and olefin slurry polymerization.

20. The catalyst or catalyst product according to claim 19, wherein the olefin is selected from the group consisting of ethylene, propylene, linear or branched α-olefin containing 4-20 carbon atoms, conjugated diene containing 4-20 carbon atoms, non-conjugated polyene containing 5-20 carbon atoms, cycloolefin containing 5-20 carbon atoms and arylethylene containing 5-20 carbon atoms;
preferably, the olefin is selected from the group consisting of ethylene, propylene, 1-butene, butadiene, 1-hexene, 1-octene and styrene.
